# EUROPEAN PATENT SPECIFICATION

(11) **EP 2 476 629 B1**
(45) Date of publication and mention of the grant of the patent: **11.01.2017**
(21) Application number: 10815560.7
(22) Date of filing: 16.08.2010
(51) Int. Cl.: B65D 65/40, B65D 65/46, B32B 27/18, B65D 5/20

(54) **SHEET CONTAINING RICE BRAN AND GIFT-SET TRAY EMPLOYING SAME**
FOLIE MIT REISKLEIE UND GESCHENKTABLETT DAMIT
FEUILLE CONTENANT DU SON DE RIZ ET PLATEAU POUR ASSORTIMENT CADEAU L'EMPLOYANT

(30) Priority: 11.09.2009 KR 20090011950 U
(43) Date of publication of application: 18.07.2012
(73) Proprietor: CJ Cheiljedang Corp., Jung-gu Seoul 100-749 (KR); Woojin Placom Co. Inc., Gyeonggi-do 472-847 (KR)
(72) Inventor: LEE, Sang Wook, Seoul 151-778 (KR); LEE, Byoung Seo, Seoul 142-100 (KR); CHA, Gu Hoan, Seoul 136-032 (KR); KWON, Ki Young, Namyangju-si Gyeonggi-do 472-775 (KR)
(74) Representative: Jostarndt Patentanwalts-AG
(86) International application number: PCT/KR2010/005388
(87) International publication number: WO 2011/031015

(56) References cited:
- KR-A- 20000 071 143
- KR-A- 20020 090 679
- KR-B1- 0 173 982
- DATABASE WPI Week 198210 Thomson Scientific, London, GB; AN 1982-18308E XP002715358, & JP S57 16048 A (MATSUSHITA ELECTRIC WORKS LTD) 27 January 1982 (1982-01-27)
- DATABASE WPI Week 200265 Thomson Scientific, London, GB; AN 2002-604902 XP002715359, & JP 2002 219779 A (UNIV KANAZAWA KOGYO) 6 August 2002 (2002-08-06)

## Description

### Field of invention

The present invention relates to sheet containing rice bran and gift-set tray employing same. More specifically, the sheet containing rice bran and gift-set tray employing same is manufactured using synthetic resins, rice bran and inorganic fillers, so that the use of petroleum-derived synthetic resins is reduced to prevent environmental pollution by containing natural substances creating new texture.

### Background of the invention

In general, packing box for gift-sets are boxes that carry gifts, and usually, various numbers of gifts can be packed as one set.

The consumption of these packing boxes for gift-sets is increasing as they are economic and practical.

So far, packing boxes for gift-sets with various appearances are being used as described below.

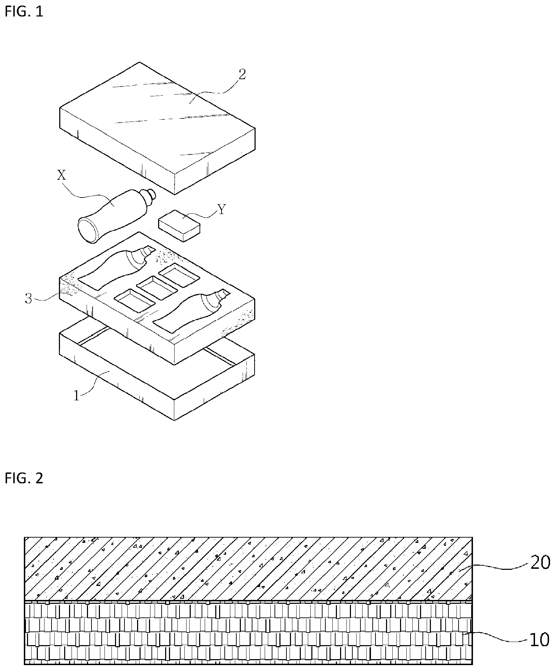

Figure 1 illustrates a box for gift-sets composed of a bottom paper board (1), top paper board (2), consolidated plastic tray which could be inserted with product (X,Y) (3).

These consolidated plastic trays (3) are included within the packing boxes for gift-sets. The plastic composing the tray is a synthetic resin obtained from petroleum which is used widely due to its great properties of matter such as processability, flexibility, intensity and low price. However, the use of plastic not only causes exhaustion of petroleum resources and environmental pollution, but also inconvenience in recycling routines due to the need to separate with paper.

### Detailed description of the invention

### Technical task

The present invention was developed to solve various defects and problems occurring from the existing sheets and trays produced from synthetic resins derived from petroleum. The aim was to prevent the exhaustion of petroleum resources and environmental pollution by reducing the use of synthetic resins from using rice bran and inorganic fillers for producing sheet and gift-set trays.

The other aim of the invention is to easily manufacture the sheet with rice bran and inorganic fillers to create new texture which cannot be obtained from synthetic resins, and also to provide an environmentally friendly gift-set tray with new texture using the same.

### Technical solution

In order to achieve the aim mentioned above, the sheet according to the present invention containing rice bran is characterised by enclosing a substrate layer (10), rice bran containing layer (20) formed on at least one surface of the mentioned substrate layer (10), and that the rice bran containing layer (20) is composed of rice bran- composition containing synthetic resin, rice bran, inorganic filler and additives.

### Effects of the invention

The present invention prevents the exhaustion of petroleum resources and environmental pollution by reducing the content of synthetic resins by adding rice bran which has small weight ratio due to its foaming effect during extrusion. Also, due to adding rice bran, the present invention allows lowering the price of the product, manufacturing of the sheet which has a unique scent with new texture that is not achievable with synthetic resins, and also provides an environmental friendly gift-set tray employing the same, which has a new texture making this a differentiated product.

### Brief description of the drawings

Figure 1 illustrates an oblique view showing the structure of a general gift-set tray,
Figure 2 illustrates a cross-sectional view of an example of the sheet containing rice bran according to the present invention,

Figure 3 illustrates a cross-sectional view of an example of a sheet containing rice bran according to the present invention.

### (Description of the marks in the drawings

10: substrate layer
20: rice bran- layer)

### Mode for implementation of invention

The preferred example of the sheet containing rice bran and gift-set tray using the same is described below in details, in reference to the attached drawings.

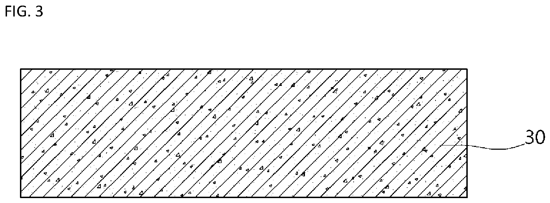

Figure 2 and Figure 3 shows a cross-sectional view of an example of a sheet containing rice bran according to the present invention. The sheet according to the present invention containing rice bran is characterised by enclosing a substrate layer (10), rice bran containing layer (20) formed on at least one surface of the mentioned substrate layer (10), and that the rice bran containing layer (20) is composed of rice bran- composition containing synthetic resin, rice bran, inorganic filler and additives.

Also, it is possible that the mentioned substrate layer (10) and rice bran containing layer (20) forms one rice bran containing layer (30).

The mentioned substrate layer (10) is formed by 60-65 weight % of synthetic resin, 32-36 weight % of inorganic filler, 3-5 weight % of additives. The rice bran containing layer (20) is formed by 60-65 weight % of synthetic resin, 2-5 weight % of rice bran, 30-35 weight % of inorganic filler, 2-5 weight % of additives.

It is preferred to use the mentioned rice bran and inorganic filler which has less than 1% of percentage moisture content after drying using a drier, but depending on the extruding conditions of the extruding machine used on the sheet, rice bran and inorganic filler which has more than 1% of percentage moisture content could also be used. In the case that the percentage moisture content is high, fault can happen during the process of extruding the sheet, and therefore circulating hot-air drying machine used at a temperature higher than 80°C for more than 24 hours is necessary.

CaCO₃ and SiO₂ can be used as the mentioned inorganic filler. The bigger the particle size of the mentioned rice bran, the quality of the material is better, but the big particle size may cause problems in the extrusion flow and high pressure in the extrusion machine. Also, the big size of the rice brans may cause lengthening problems during molding. On the other hand, it is difficult to obtain the preferred quality of material when the size of the rice bran particle is too small, and the size of the rice bran particle should be controlled according to the conditions of the extrusion machine. It is preferred to select rice bran that has passed through a strainer of larger than 60 mesh (0.25 mm).

When the extrusion occurs at a high temperature, the rice bran may burn. Therefore, for extrusion, preheating is necessary at a temperature less than what is used for extruding synthetic resins and then increase the temperature according to the extrusion flow. The preferred extrusion temperature is 180-220°C.

Since the strength and lengthening properties of the sheet containing rice bran and gift- set tray employing same is not as good as the existing ones made from synthetic resin, is preferred to use elastomer or tafmer as mentioned additives to complement these properties. Also, by increasing 10 weight percentage of polyethylene and decreasing 10 weight percentage of synthetic resins can improve the strength and lengthening properties of the sheet containing rice bran and gift-set tray.

The mentioned sheet can be bended and molded to produce various structures and forms of gift-set trays likewise to others made of sheet from existing paper or synthetic resins.

As previously described, the production of the present invention related to the sheet containing rice bran and gift-set tray employing same can contribute to using less synthetic resins. This is due to the fact that even though a small weight of rice bran is used to produce the sheet and gift set tray, the rice bran takes a large volumetric ratio due to its small weight and foaming effects during heat extrusion. Also, rice bran sheet and gift-set tray employing same is inexpensive to produce than using synthetic resins. Furthermore, rice bran sheet and gift-set tray employing same has new texture and specific scent which confers differentiated merchantable quality from other the products.

The preferred example of the present invention has been described so far, but the present invention is not just limited to this, and could be modified in various ways to be implemented regarding that the modification is within the scope of the invention.

## Claims

1. A sheet containing rice bran **characterised by** a substrate layer (10), rice bran containing layer (20) formed on at least one surface of the mentioned substrate layer (10), and that the mentioned rice bran containing layer (20) is composed of rice bran- composition containing synthetic resin, rice bran, inorganic filler and additives.

2. The sheet containing rice bran of claim 1, wherein the mentioned substrate layer (10) and rice bran containing layer (20) forms one rice bran containing layer (30).

3. The sheet containing rice bran of claim 1 or claim 2, wherein the mentioned substrate layer (10) is formed by 60-65 weight % of synthetic resin, 32-36 weight % of inorganic filler, 3-5 weight % of additives. The rice bran containing layer (20) is formed by 60-65 weight % of synthetic resin, 2-5 weight % of rice bran, 30-35 weight % of inorganic filler, 2-5 weight % of additives.

4. The sheet containing rice bran of any one of claims 1 to 3, wherein the mentioned rice bran is dried at a temperature higher than 80°C for more than 24 hours.

5. The sheet containing rice bran of claim 3, wherein the mentioned inorganic filler is CaCO₃ or SiO₂.

6. The sheet containing rice bran of claim 3, wherein the additive is elastomer.

7. A gift-set tray made from bending or molding the sheet containing rice bran of any one of claims 1 to 6.

## Patentansprüche

1. Folie, die Reiskleie enthält, **gekennzeichnet durch** eine Substratschicht (10), **durch** eine Reiskleie-haltige Schicht (20), die auf wenigstens einer Oberfläche der erwähnten Substratschicht (10) gebildet ist, und **dadurch**, dass die erwähnte Reiskleie-haltige Schicht (20) aus einer Reiskleiezusammensetzung besteht, die Kunstharz, Reiskleie, einen anorganischen Füllstoff und Additive enthält.

2. Folie, die Reiskleie enthält, nach Anspruch 1, wobei die erwähnte Substratschicht (10) und die erwähnte Reiskleie-haltige Schicht (20) eine Reiskleie-haltige Schicht (30) bilden.

3. Folie, die Reiskleie enthält, nach Anspruch 1 oder Anspruch 2, wobei die erwähnte Substratschicht (10) durch 60-65 Gew.-% Kunstharz, 32-36 Gew.-% anorganischen Füllstoff, 3-5 Gew.-% Additive gebildet ist. Die Reiskleie-haltige Schicht (20) ist durch 60-65 Gew.-% Kunstharz, 2-5 Gew.-% Reiskleie, 30-35 Gew.-% anorganischen Füllstoff, 2-5 Gew.-% Additive gebildet.

4. Folie, die Reiskleie enthält, nach einem der Ansprüche 1 bis 3, wobei die erwähnte Reiskleie mehr als 24 Stunden bei einer Temperatur höher als 80 °C getrocknet worden ist.

5. Folie, die Reiskleie enthält, nach Anspruch 3, wobei der erwähnte anorganische Füllstoff CaCO₃ oder SiO₂ ist.

6. Folie, die Reiskleie enthält, nach Anspruch 3, wobei das Additiv ein Elastomer ist.

7. Geschenk-Set-Schale, die durch Biegen oder Formen der Folie, die Reiskleie enthält, nach einem der Ansprüche 1 bis 6, hergestellt ist.

## Revendications

1. Feuille contenant du son de riz, **caractérisée par** une couche de substrat (10), une couche contenant du son de riz (20) formée sur au moins une surface de la couche de substrat (10) mentionnée, et en ce que la couche contenant du son de riz (20) mentionnée est composée d'une composition de son de riz contenant de la résine synthétique, du son de riz, de la charge inorganique et des additifs.

2. Feuille contenant du son de riz selon la revendication 1, dans laquelle la couche de substrat (10) mentionnée et la couche contenant du son de riz (20) forment une couche contenant du son de riz (30).

3. Feuille contenant du son de riz selon la revendication 1 ou la revendication 2, dans laquelle la couche de substrat (10) mentionnée est formée de 60-65 % en poids de résine synthétique, de 32-36 % en poids de charge inorganique, de 3-5 % en poids d'additifs. La couche contenant du son de riz (20) est formée de 60-65 % en poids de résine synthétique, de 2-5 % en poids de son de riz, de 30-35 % en poids de charge inorganique, de 2-5 % en poids d'additifs.

4. Feuille contenant du son de riz selon l'une quelconque des revendications 1 à 3, dans laquelle le son de riz mentionné est séché à une température supérieure à 80°C pendant plus de 24 heures.

5. Feuille contenant du son de riz selon la revendication 3, dans laquelle la charge inorganique mentionnée est du CaCO₃ ou du Si0₂.

6. Feuille contenant du son de riz selon la revendication 3, dans laquelle l'additif est de l'élastomère.

7. Plateau pour assortiment cadeau fabrique en pliant ou en moulant la feuille contenant du son de riz selon l'une quelconque des revendications 1 à 6.
